# EUROPEAN PATENT APPLICATION

(11) **EP 0 567 441 A1**
(43) Date of publication of application: **27.10.1993**
(21) Application number: 93850087.3
(22) Date of filing: 22.04.1993
(51) Int. Cl.: B65G 69/22, E06B 7/16

(54) **Dock seal**

(30) Priority: 23.04.1992 SE 9201272
(71) Applicant: TRELLEBORG INDUSTRI AB, 231 81 Trelleborg (SE)
(72) Inventor: Fritze, John Erik Christer, S-233 33 Svedala (SE); Olsson, Siw Kerstin Evelyn, S-271 40 Ystad (SE)
(74) Representative: Lundin, Björn-Eric

(57) **Abstract**

The invention relates to a dock seal which includes at least one inflatable sealing element which functions to press sealingly against a loading/off-loading vehicle located in the immediate vicinity of a loading port, and which further includes means for returning the inflated sealing elements to a rest state. The invention is characterized in that at least one sealing element is provided with an outer casing which, when the element is in an inflated state, essentially surrounds and at least partially abuts the largest outer surface of the sealing element and extends around the major part of its perimeter, and wherein the casing forms at least a part of the element returning means. When the element has been returned to its non-use position, the casing also functions to squeeze the element to a fixed rest position and therewith also protect the element against the influence of external forces.

## Description

The present invention relates to a dock seal of the kind which includes at least one inflatable sealing element which adapts to the profile shape of a loading and off-loading vehicle located in the immediate vicinity of a loading and off-loading port, and which further includes means for returning an inflatable sealing element to its inoperative state.

Dock seals, also referred to as loading port curtains, of the kind defined in the preamble have been commercially available for a relatively long time. For instance, Trelleborg's earlier Patent Specification SE-B-8103514-9 (430350) describes one such dock seal which comprises inflatable, cushion-like sealing elements. The various sealing elements of the dock seal are inflated with the aid of a fan. The vertical sealing elements are each connected to the wall surface of the loading port along their respective vertical hinge lines around which the sealing elements are able to pivot.

However, it is also known to construct dock seals from tailor-made inflatable cushions which are rigidly attached to the wall surface and which when inflated lie conformingly in abutment with the profile shape of the vehicle. Similar to the dock seal described in SE-B-7608109-0 (400255), the sealing elements may have the form of inflatable hose-like bags which support against the wall and extend outwardly from the wall surface and surround the vehicle. The sealing elements may also be provided at their lower ends with a corner cushion which is connected to the elements in a manner such that the cushion will be inflated at the same time as said elements, so as to seal from beneath against vertically acting drafts or air currents.

The vertical sealing elements are returned to their respective inoperative states, i.e. to an idle state, with the aid of highly elastic clamping belts which, through the agency of their intrinsic clamping forces, draw-in the sealing elements and therewith squeeze air from the cushions in said elements until a state of equilibrium is reached, this state of equilibrium being dependent on the clamping force generated and on the resistance offered to this force by the material from which the sealing elements are made and also by the air contained therein. However, because of the high requirements placed on the properties of the material from which the sealing elements are made, for instance the properties of being wear resistant, weather resistant and airtight, the sealing elements are difficult to handle as a result of the requisite intrinsic stiffness of said material. Neither has it been possible hitherto to return the sealing elements of known dock seals to a satisfactory fixed, inoperative or rest state. Furthermore, none of the known dock seal constructions provide satisfactory protection to the sealing elements when in their rest state. Thus, when in a rest state, the sealing elements, and primarily the vertical sealing elements, are subjected to unnecessary fatigue and wear, by the weather and the wind, for instance when the collapsed sealing element pack is gripped by gusts of wind and thrown forwards and backwards along its wall attachment with only the aforesaid clamping belts as a restraining force. Consequently, the length of useful life of at least the vertical sealing elements is shortened considerably by the external forces to which the elements are subjected in their inoperative state. In cases of wear, the only solution is to replace the entire sealing element. Another drawback with those dock seals hitherto known to the art resides in their ugly appearance. The aesthetic appearance of dock seals is becoming more and more important, which means that the authorities may make it difficult, or even prevent, dock seals of the aforedescribed kind from being installed. These aesthetic problems are associated with the appearance of the dock seals when in their inoperative state.

The object of the present invention is to provide a dock seal with which the aforesaid drawbacks are essentially eliminated. To this end, the inventive dock seal is characterized by the features set forth in the following claims. Thus, at least one sealing element is located within an element casing. This casing is constructed so that in the inflated use position of the sealing element the casing will generally surround and at least partially lie against the largest outer surface of the sealing element and extend around the greater part of the element perimeter. The casing also forms at least one part of the means by which the elements are returned to their respective inoperative states, these means being referred to hereinafter as the element restoring means. When the sealing element is restored to its inoperative state, in the following also called the rest state, the casing functions to press the element to a fixed rest state and also to protect the element against the influence of external forces.

The separate casing is preferably capable of being rolled-up. In this regard, the casing is conveniently rolled-up on a roller having a length such as to enable the entire casing to be reeled thereonto. The roller is conveniently driven by a downwardly hanging weight, similar to a plummet, which is in turn driven by the force of gravity, wherein the weight may advantageously move within a vertical tube suitably intended for rolling-up a sealing element forming part of the dock seal. It is also possible, and even suitable, to construct all casings so that the outwardly projecting corner cushions, when included in the dock seal, will also be housed within the casings.

The separate casing is conveniently made of fabric, foil or the like having a high wear resistance, a high tear resistance and a high weather resistance. Rubber fabric or PVC-coated fabric are examples of suitable material for use in this respect. The casing may also be constructed so as to enable it to be readily replaced.

It can be of interest to mention in this regard that the invention enables an optimum choice of material for both the sealing element and the casing within which the element is protected. According to the invention, the sealing element may be made from a thin and pliable material so as to occupy the minimum of space when in its rest state. Thus, the material from which the sealing element is made need not have a high wear resistance and high tear resistance, as in the case of known dock seals in which the sealing elements are awkward and difficult to handle, as mentioned in the introduction.

The invention will now be described in more detail with reference to a preferred exemplifying embodiment thereof and also with reference to the accompanying drawing, in which:
Figure 1 illustrates schematically a vertical sealing element and shows the element from above and partially in section;
Figure 2 illustrates the same sealing element in its rest state; and
Figure 3 illustrates two vertical sealing elements in front view and also illustrates counterweights which function to drive the rollers onto which the sealing elements are wound.

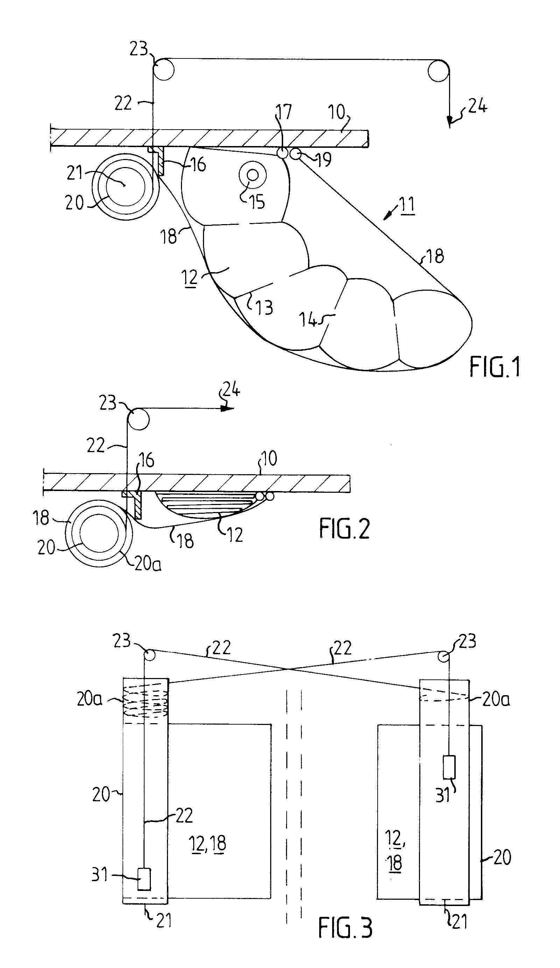

The reference numeral 10 in Figure 1 identifies a wall surface located to the left of a loading/off-loading port or the like. Attached to the wall surface 10 is a dock seal 11, of which only one sealing element 12 is shown, said element comprising four segments or part-elements. Located between the part-elements are partition walls 13 which include through passages 14 through which air can pass between the cushion-like part-elements of the sealing element 12. Air is blown into the sealing element 12 through a hose 15 connected to a fan (not shown), possibly via a further sealing element (not shown). The sealing element 12 is pivotally mounted on the wall surface 10 by means of a device 17 adapted therefor, for instance a device of the kind described in SE-B-430350.

A casing 18 is mounted on the wall surface 10 along a vertical line, seen here as a point 19, for instance in a manner similar to that described above with regard to the sealing element, or in some other convenient manner on the actual sealing element or the wall. The casing 18 extends generally in the vertical plane, i.e. perpendicular to the illustrated view. The casing 18 connects generally with the vertical outer surfaces of the sealing element 12, from the wall attachment 17 and around its outer cushion-like part-elements, and then continues along the "outer side" of said sealing element 12. Mounted on the left of the sealing element, close to the wall surface 10, is a wind-on roller 20 which is rotatable about an axle 21, which is vertical in the illustrated case. The roller 20 is driven by means of a rope or line 22 and one or more pulleys 23, with a force indicated by the arrow 24 in Figure 1. This force 24 may be generated by an electric motor or may be the force of gravity exerted on a hanging weight in a manner not shown. It will be assumed in the following that the force is generated by a hanging weight.

The illustrated arrangement also includes an L-shaped device 16 which functions to prevent the sealing element 12 from being wound onto the roller 20 and from being clamped between the roller 20 and the wall 10.

When the dock seal 11 is to be used, air is blown by a fan into all sealing elements 12 included in the dock seal, through hoses 15. In this way, each cushion-like part-element of the sealing element 12 is inflated as the air blown in to said element is caused to pass through the air passages 14 between the part-elements of the sealing element 12. When the sealing element 12 has been inflated to its maximum possible volume, the injection of air into said element is held steady with the aid of the blower fans, so as to maintain an over-pressure in the element. As the sealing element 12 is inflated, the casing 18 is also unrolled successively from the roller 20, by the force obtained indirectly from the fan, such that when the sealing element 12 has been inflated to its maximum the casing 18 will envelope the sealing element 12 on all vertical sides thereof with the exception of that side which faces towards the wall 10.

When the dock seal 11 shall no longer be used, the fans are switched off. Through the agency of the prevailing atmospheric air pressure and the pulling force exerted by the weight, this force being transferred via the roller 20 and the casing 18, the air present within the sealing elements 12 will be forced out into the surroundings through the air passages 14, the hoses 15 and the fans. Because the weight falls successively under the influence of gravity, the roller 20 will be rotated counterclockwise with the aid of the line 22 wound on the upper part 20a of the roller 20. The casing 18 is therewith wound successively onto the roller 20 and the casing 18 assists generally in compressing the sealing element 12 into a rest position close against the wall surface 10. Figure 2 illustrates the rest state, or rest position of a dock seal 11. It will be seen that when in its rest state, the sealing element 12 is tightly compressed and held in place by a force exerted thereon by the casing 18, which, in turn, is held stretched and wound tightly on the roller 20 to the greatest possible extent by the effect obtained by the gravitational force acting on the weight via the line 22 wound onto the upper part 20a of the roller 20.

Figure 3 illustrates an embodiment in which the weight 31 is used to effect rotation of respective rollers 20. Figure 3 is a front view of a pair of vertical sealing elements 12 each provided with a protecting and element restoring casing 18. For the sake of illustration, the left-hand sealing element is shown in its position of use and the right-hand element is shown in its rest position. The weights 31 hang from their respective lines 22 within the rollers 20, which thus have a hollow tubular construction. The left-hand weight 31 forms the restoring means for the right-hand sealing element 12 and hangs on a line 22 which extends over a pulley 23 and to the right-hand roller 20, where it is connected to the upper part 20a of said roller. Since the right-hand sealing element 12 is shown in its rest position, the left-hand weight 31, which drives the roller 20 of the right-hand element 12, has taken its lowest possible position, i.e. a rest position.

The right-hand weight 31 is shown in Figure 3 in its highest position, to which it is moved by the force exerted by the inflating air in the left-hand sealing element 12 during the state of use of said element. In this case, the line 22 from which the right-hand weight 31 hangs is partially wound onto the upper part 20a of the left-hand roller.

Although not specifically illustrated or described in the aforegoing, it will be understood that it is fully possible to arrange the sealing elements horizontally or even obliquely.

The invention affords several important advantages over the inflatable dock seals at present on the market.
* as above mentioned less stringent demands can be placed on the materials from which the sealing elements and the casings are made;
* a separate and easily replaced wear protective casing is provided;
* a fixed rest position is ensured;
* the dock seal has an aesthetic appearance in its rest position.

## Claims

1. A dock seal including at least one inflatable sealing element which functions to press against a loading/off- loading vehicle located in the immediate vicinity of a loading port, and means for returning the at least one inflated sealing element to its inoperative state, characterized in that at least one sealing element has an outer casing which is so arranged that in the inflated use position of said sealing element the casing will essentially surround and at least partially lie against the largest outer surface of the element and extend around the major part of the perimeter of said element, and which also forms at least a part of said element returning means, wherein in the non-use position of the sealing element the casing functions to squeeze said element to a fixed rest position and therewith also protect the element against the influence of external forces.

2. A dock seal according to Claim 1, characterized in that the separate casing can be rolled-up.

3. A dock seal according to Claim 2, characterized by a roller whose length is generally equal to the width of said casing and onto which the casing can be wound.

4. A dock seal according to Claim 3, characterized in that the roller is driven by a downwardly hanging weight.

5. A dock seal according to Claim 3 and 4, characterized in that at least one vertically arranged roller is hollow; and in that the weight driving a sealing element of the dock seal moves within the roller.

6. A dock seal according to Claim 1, characterized in that the separate casing is made of a fabric which is highly wear resistant, tear resistant and weather resistant.

7. A dock seal according to Claim 6, characterized in that the casing fabric is a rubber fabric or a PVC-coated fabric.

8. A dock seal according to Claim 1, characterized in that the casing can be replaced separately from the sealing element with which it coacts.
